Europäisches Patentamt

European Patent Office

Office européen des brevets

(19)

(11) Numéro de publication: **0 258 163 B1**

(12) **FASCICULE DE BREVET EUROPEEN**

(45) Date de publication de fascicule du brevet:
03.07.91

(51) Int. Cl.⁵: **A47C 5/12**, A47C 3/12,
B29C 33/00

(21) Numéro de dépôt: 87420229.4

(22) Date de dépôt: 28.08.87

Le dossier contient des informations techniques
présentées postérieurement au dépôt de la
demande et ne figurant pas dans le présent
fascicule.

(54) **Procédé de fabrication d'un siège à dossier(s) et/ou accoudoir(s) et siège obtenu par ce procédé.**

(30) Priorité: 29.08.86 FR 8612577

(43) Date de publication de la demande:
02.03.88 Bulletin 88/09

(45) Mention de la délivrance du brevet:
03.07.91 Bulletin 91/27

(84) Etats contractants désignés:
AT BE CH DE ES GB GR IT LI LU NL SE

(56) Documents cités:
FR-A- 2 444 415
GB-A- 2 150 428
NL-A- 6 914 039

(73) Titulaire: **Preti, Gérard**
**LARNY POLLIONNAY**
**F-69290 CRAPONNE(FR)**

(72) Inventeur: **Preti, Gérard**
**LARNY POLLIONNAY**
**F-69290 CRAPONNE(FR)**

(74) Mandataire: **Maureau, Philippe et al**
**Cabinet Germain & Maureau Le Britannia -**
**Tour C 20, bld Eugène Déruelle Boîte Posta-**
**le 3011**
**F-69392 Lyon Cédex 03(FR)**

## Description

La présente invention se rapporte à un procédé de fabrication de sièges à dossier (s) et/ou accoudoir (s), tels que canapés, fauteuils et autres meubles similaires.

Les fauteuils, canapés ou meubles similaires sont ordinairement réalisés par habillage d'une armature rigide, en bois ou en métal par exemple. La réalisation d'une telle armature implique un degré de liberté tridimensionnel restreint à un certain nombre de structures géométriques de sorte qu'il n'est pas possible de réaliser des formes totalement libres au gré de l'artiste créateur, du point de vue tridimensionnel.

On connaît aussi, par le document NL-A-6 914 039, un procédé de fabrication de sièges à dossier (s) et/ou accoudoir(s), tels que fauteuils, dans lequel on forme au moins un de ces dossiers et/ou accoudoirs en utilisant un grillage préformé sur lequel on rapporte un matériau composite par superposition de couches successives de fibres de verre et de résine, parmi lesquelles au moins une couche est constituée par un tissu de verre, de façon à réaliser une coque en matériau composite épousant la forme du grillage, un habillage de la coque étant ultérieurement réalisé.

Dans ce procédé connu, qui offre la possibilité de réalisation de formes tridimensionnelles sans restriction, le grillage reste en place dans le siège fini. La présence définitive du grillage accroît inutilement l'épaisseur des parties de siège réalisées, ainsi que la rigidité de ces parties.

L'invention a pour objet un procédé de fabrication de sièges tels que canapés, fauteuils et autres meubles similaires qui ne comporte plus les inconvénients ci-dessus exposés, donc un procédé qui offre la possibilité de réaliser toutes formes tridimensionnelles, tout en améliorant la souplesse et le confort des sièges obtenus.

A cet effet, le procédé selon l'invention, du genre indiqué dans le préambule de la revendication 1, est caractérisé en ce que le grillage est retiré après la réalisation de la coque et avant la réalisation de l'habillage de cette coque, et en ce que le dossier et/ ou l'accoudoir obtenu après habillage de la coque est fixé finalement sur l'assise du siège.

Avantageusement, ce procédé est en outre caractérisé en ce que l'on place dans la coque, au cours de sa fabrication, au moins un insert pour la fixation finale du dossier et/ou accoudoir sur l'assise du siège.

Concrètement, le procédé de l'invention se caractérise avantageusement par une succession d'étapes consistant :
- à fixer de manière provisoire, le grillage sur l'ossature d'assise

- à le modeler pour lui donner la forme tridimensionnelle voulue
- à coller un mât de verre sur la surface du grillage,
- à enduire ce mât d'une première couche de résine,
- à coller sur cette première couche, après durcissement, un tissu de verre et à appliquer sur ce tissu une deuxième couche de résine,
- à recommencer, après durcissement de cette deuxième couche, cette dernière opération encore au moins une fois tout en ayant soin de placer le ou les inserts de fixation,
- à retirer alors le grillage, à ébarber et dresser la coque en matériau composite ainsi obtenue pour lui donner son contour définitif,
- à réaliser l'habillage de la coque à l'aide d'une garniture, puis d'un revêtement extérieur,
- à fixer par les inserts le dossier ou accoudoir obtenu sur l'assise du siège.

L'invention se rapporte enfin à un siège fabriqué conformément à ce procédé, caractérisé en ce qu'il comporte au moins un dossier et/ou accoudoir de forme libre, dont l'ossature est constituée par une coque en matériau composite.

De toutes façons, l'invention sera bien comprise, et ses avantages et autres caractéristiques ressortiront, au cours de la description suivante d'un exemple non limitatif de réalisation d'un canapé, en référence aux dessins annexés dans lesquels :
- figure 1 montre, en perspective, l'ossature de l'assise de ce canapé avec les grillages fixés provisoirement et préformés,
- figure 2 est une vue en coupe selon II-II de la figure 1,
- figure 3 est une vue similaire à celle de la figure 2, mais après fabrication de la coque sur le grillage par application de couches successives,
- figure 4 est une vue agrandie du détail IV de la figure 3
- figure 5 montre, en coupe transversale, le dossier réalisé après habillage de cette coque,
- figure 6 montre, en perspective partiellement écorchée, le canapé dans sa forme finale.

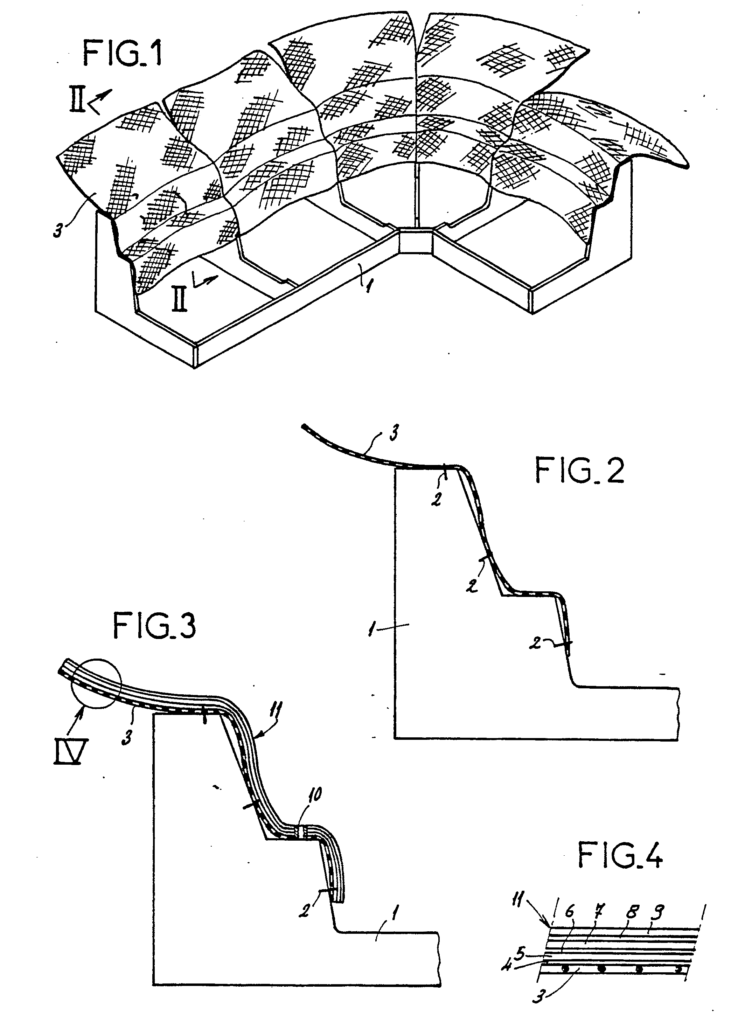

Sur la figure 1 est schématisée la première étape du procédé. Sur l'ossature en bois 1 de l'assise du canapé, on vient fixer par quelques agrafes 2 un grillage métallique 3, constitué de préférence par du grillage "à poules" à mailles hexagonales de surface d'un à deux cm2. Ce grillage peut être soit d'une seule pièce, soit en plusieurs pièces comme c'est le cas pour la figure 1. Le grillage 3 étant ainsi fixé, le créateur le découpe et le modèle pour lui donner les dimensions et la forme tridimensionnelle souhaitées. Il peut alors donner libre cours à son talent artistique.

On pose alors sur toute la surface du grillage un mât de verre 4 (figures 3 et 4), après avoir appliqué quelques gouttes de résine en quelques points du grillage, pour fixer ce mât en quelques endroits par collage. On enduit ensuite le mât 4 d'une couche de résine 5 que l'on applique à loisir au pinceau, au rouleau ou au pistolet.

On attend quelques heures pour laisser la résine se durcir puis on applique sur la couche 5 un tissu de verre 6 que l'on enduit pareillement d'une deuxième couche 7 de résine.

Après durcissement de la couche 7, on pose les inserts 10, qui sont constitués par de petits tubes taraudés intérieurement, puis on recommence l'opération avec un deuxième tissu de verre 8 et une dernière couche de résine 9. Après durcissement de celle-ci, la réalisation d'une coque 11 d'une épaisseur de 6mm environ, constituée des éléments 4 à 10 et ayant la forme du grillage 3, est pratiquement terminée.

On désolidarise alors l'ensemble 3 et 11 de l'ossature 1 en retirant les agrafes 2, puis on arrache le grillage 3 de la coque 11. A l'aide par exemple d'un disque de tronçonneuse, on ébarbe et on dresse la coque 11 pour lui donner sa découpe définitive.

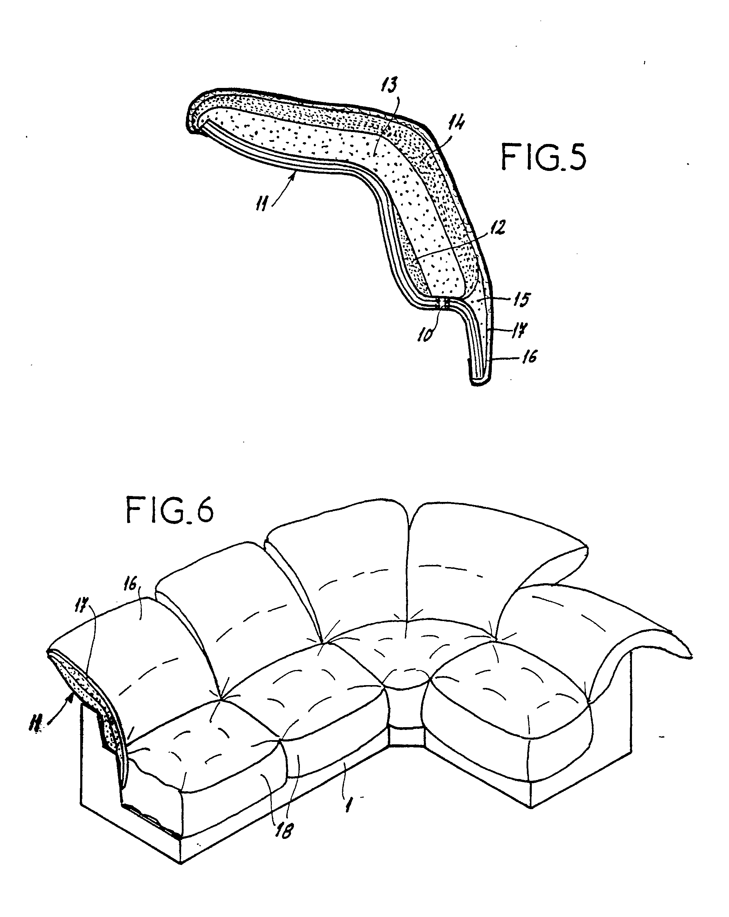

On habille alors (figure 5) la coque 11 de manière classique avec différentes mousses 12 à 15 de duretés choisies, puis avec une fine peau d'agneau ou de vachette 16, d'une épaisseur de l'ordre de 1 mm au maximum. Conformément à un aspect intéressant de l'invention, on colle préalablement sur la surface interne de cette fine peau 16, une couche de ouate synthétique 17 de 3 mm d'épaisseur, ce qui présente l'avantage de lui donner un supplément de souplesse assez inattendu.

Les dossiers et accoudoirs du canapé étant tous ainsi réalisés, il ne reste plus qu'à les visser sur l'ossature 1 en utilisant les inserts 10, puis à poser des coussins 18 sur cette ossature pour réaliser finalement le canapé représenté sur la figure 5.

L'invention n'est bien évidemment pas limitée à l'exemple de réalisation qui vient d'être décrit, mais elle s'applique également à la fabrication de fauteuils, banquettes ou meubles équivalents.

## Revendications

1. Procédé de fabrication de sièges à dossier (s) et/ou accoudoir (s), tels que canapés et fauteuils, dans lequel on forme au moins un de ces dossiers et/ou accoudoirs en utilisant un grillage (3) préformé sur lequel on rapporte un matériau composite par superposition de couches (4 - 9) successives de fibres de verre et de résine, parmi lesquelles au moins une couche est constituée par un tissu de verre, de façon à réaliser une coque (11) en matériau composite épousant la forme du grillage (3), un habillage de la coque (11) étant ultérieurement réalisé, caractérisé en ce que le grillage (3) est retiré après la réalisation de la coque (11) et avant la réalisation de l'habillage (12 - 17) de cette coque (11), et en ce que le dossier et/ou l'accoudoir obtenu après habillage de la coque (11) est fixé finalement sur l'assise du siège.

2. Procédé selon la revendication 1, caractérisé en ce que l'on place dans la coque (11) au cours de sa fabrication, au moins un insert (10) pour la fixation finale du dossier et/ou accoudoir sur l'assise du siège.

3. Procédé selon la revendication 2, caractérisé en ce qu'il consiste :
   - à fixer de manière provisoire le grillage (3) sur l'ossature d'assise (1),
   - à le modeler pour lui donner la forme tridimensionnelle voulue,
   - à coller un mât de verre (4) sur la surface du grillage (3),
   - à enduire ce mât d'une première couche de résine (5),
   - à coller sur cette première couche (5), après durcissement, un tissu de verre (6) et à appliquer sur ce tissu une deuxième couche de résine (7),
   - à recommencer après durcissement de cette deuxième couche (7) cette dernière opération encore au moins une fois tout en ayant soin de placer le ou les inserts (10) de fixation,
   - à retirer alors le grillage (3), à ébarber et dresser la coque (11) en matériau composite ainsi obtenue pour lui donner son contour définitif,
   - à réaliser l'habillage de la coque à l'aide d'une garniture (12 - 15), puis d'un revêtement extérieur (16),
   - à fixer par les inserts (10) le dossier ou accoudoir obtenu sur l'assise du siège.

4. Procédé selon l'une des revendications 1 à 3, du type selon lequel on réalise le revêtement extérieur du dossier ou de l'accoudoir au moyen d'une peau fine (16) d'épaisseur inférieure ou égale à environ 1mm, telle qu' une peau d'agneau ou de vachette, caractérisé en ce que l'on colle sur la face interne de cette peau une couche de ouate (17) d'une épaisseur de quelques millimètres.

5. Siège fabriqué conformément au procédé selon l'une quelconque des revendications 1 à 4, caractérisé en ce qu'il comporte au moins un dossier et/ou accoudoir de forme libre dont l'ossature est constituée par une coque (11) en matériau composite.

## Claims

1. Method of manufacturing seats with backrest(s) and/or armrest(s), such as sofas and armchairs, whereby at least one of these backrests and/or armrests is formed by using a preformed mesh (3) upon which is placed a composite material by superposing successive layers (4 - 9) of glass fibre and resin, at least one layer of which consists of a glass fabric, so as to form a shell (11) made of composite material hugging the shape of the mesh (3), a covering of the shell (11) being subsequently made, characterized in that the mesh (11) is withdrawn after forming the shell (11) and before making the covering (12 - 17) of this shell (11), and in that the backrest and/or armrest obtained after covering the shell (11) is finally attached to the base of the seat.

2. Method according to Claim 1, characterized in that there is placed upon the shell (11) in the course of its manufacture at least one insert (10) for final attachment of the backrest and/or armrest to the base of the seat.

3. Method according to Claim 2, characterized in that it involves:
   - Temporarily attaching the mesh (3) to the frame of the base (1);
   - Shaping it so as to give it the desired three-dimensional shape;
   - Sticking a glass strut (4) to the surface of the mesh (3);
   - Coating this strut with a first layer of resin (5);
   - Sticking to this first layer (5), after it has hardened, a glass fabric (6), and applying to this fabric a second layer of resin (7);
   - Repeating this latter operation, after this second layer (7) has hardened, at least once, taking care to place in position the attaching insert(s) (10);
   - Then removing the mesh (3), trimming and shaping the shell (11) made of composite material which has thus been obtained, so as to give it its final shape;
   - Completing the covering of the shell with a lining (12 - 15), and then with an exterior upholstery (16);

   - Attaching the backrest or armrest obtained to the base of the seat, by means of the inserts (10).

4. Method according to one of Claims 1 to 3, of the type according to which the exterior upholstery of the backrest or armrest consists of a fine skin (16) with a thickness which is less than or equal to approximately 1 mm, such as a lamb or calf skin, characterized in that a layer of padding (17) with a thickness of a few millimetres is stuck to the interior face of this skin.

5. Seat manufactured by the method according to any one of Claims 1 to 4, characterized in that it has at least one backrest and/or armrest of unspecified shape, the frame of which is formed from a shell (11) of composite material.

## Ansprüche

1. Verfahren zur Herstellung von Sitzmöbeln mit Rückenlehne(n) und/oder Armlehne(n), z.B. Sofas und Sesseln,
   bei dem man die Rückenlehne(n) und die Armlehne(n) oder zumindest eines dieser Teile mit Hilfe eines vorgeformten Gitters (3) ausbildet, auf dem man durch Übereinanderlagerung von aufeinander folgenden Schichten (4-9) aus Glasfasern und Harz ein Verbundmaterial aufbringt, um auf diese Weise eine an die Form des Gitters (3) angepaßte Schale (11) aus Verbundmaterial herzustellen, wobei wenigstens eine dieser Schichten aus Glasgewebe besteht,
   wobei weiterhin eine Verkleidung der Schale (11) hergestellt wird,
   **dadurch gekennzeichnet,**
   daß das Gitter (3) nach Ausbildung der Schale (11) und vor der Herstellung der Verkleidung (12-17) der Schale (11) abgezogen wird,
   und daß schließlich nach der Herstellung der Verkleidung die Rückenlehne und/oder Armlehne an dem Sitzteil des Sitzmöbels befestigt wird.

2. Verfahren nach Anspruch 1, dadurch gekennzeichnet, daß man in die Schale (11) im Verlauf ihrer Herstellung wenigstens ein Einsatzteil (10) für die endgültige Befestigung der Rückenlehne und/oder Armlehne an dem Sitzteil des Sitzmöbels einbringt.

3. Verfahren nach Anspruch 1, dadurch gekennzeichnet,
   daß man das Gitter (3) provisorisch an der Tragkonstruktion des Sitzteiles befestigt,

daß das Gitter modelliert wird, um ihm die gewünschte dreidimensionale Form zu verleihen,

daß auf die Oberfläche des Gitters (3) eine Glasmatte (4) geklebt wird,

daß diese Glasmatte mit einer ersten Harzschicht (5) bestrichen wird,

daß auf diese erste Harzschicht (5) nach der Aushärtung ein Glasgewebe (6) geklebt und auf diesem Gewebe eine zweite Harzschicht (7) aufgebracht wird,

daß nach der Aushärtung dieser zweiten Harzschicht (7) der letztgenannte Vorgang wenigstens noch einmal ausgeführt wird, wobei das oder die Einsatzteile (10) zur Befestigung angebracht werden,

daß das Gitter (3) dann abgezogen und die so erhaltene Schale (11) aus Verbundmaterial beschnitten und zugerichtet wird, um ihr ihre endgültige Kontur zu geben,

daß die Verkleidung der Schale mit Hilfe einer Ausfütterung (12-14) und dann eines äußeren Überzugs (16) hergestellt wird,

und daß die so erhaltene Rückenlehne oder Armlehne mit Hilfe der Einsatzteile (10) an dem Sitzteil des Sitzmöbels befestigt wird.

4. Verfahren nach einem der Ansprüche 1 bis 3, bei dem die äußere Verkleidung der Rückenlehne oder der Armlehne aus einem feinen Leder (16) mit einer Stärke von 1 mm oder weniger, z.B. aus Lammleder oder Kalbsleder, ausgeführt wird, dadurch gekennzeichnet, daß man auf die Innenseite dieses Leders eine Watteschicht (17) mit einer Stärke von einigen Millimetern aufklebt.

5. Nach dem Verfahren nach einem der Ansprüche 1 bis 4 hergestelltes Sitzmöbel, dadurch gekennzeichnet, daß es wenigstens eine frei geformte Rückenlehne und/oder Armlehne aufweist, deren Tragkonstruktion von einer Schale (11) aus Verbundmaterial besteht.

FIG.1

FIG.2

FIG.3

FIG.4

FIG.5

FIG.6